# DEMANDE DE BREVET EUROPEEN

(11) **EP 2 604 556 A1**
(43) Date de publication de la demande: **19.06.2013**
(21) Numéro de dépôt: 12196815.0
(22) Date de dépôt: 12.12.2012
(51) Int. Cl.: B65G 69/34, B65G 69/00

(54) **Dispositif de sécurité pour quai de transbordement**

(30) Priorité: 13.12.2011 FR 1103809
(71) Demandeur: Schardes, 01270 Beaupont (FR)
(72) Inventeur: Goyet, Laurent, 01270 BEAUPONT (FR)
(74) Mandataire: Croonenbroek, Thomas Jakob

(57) **Abrégé**

L'invention concerne un dispositif de sécurité pour quai de transbordement caractérisé en ce qu'il comporte au moins un butoir de quai (5a, 5b) présentant:
- un socle de maintien destiné à être fixé à une entrée de quai de transbordement (3),
- une butée mobile (6) contre laquelle l'arrière d'un véhicule est destiné à venir en appui pour rétracter ladite butée mobile (6) vers ledit socle de maintien par poussée dans une position rétractable,
- une liaison extensible/rétractable reliant ladite butée mobile (6) audit socle de maintien,
- un moyen d'actionnement de ladite liaison extensible/rétractable pour déployer ladite butée mobile (6) à l'écart dudit socle de maintien dans une position de déploiement, et
- un moyen de blocage,

et caractérisé en ce que le dispositif de sécurité comporte en outre un détecteur de présence apte à commander ledit moyen de blocage pour bloquer la rétractation de la butée mobile (6) par poussée du véhicule en cas de détection d'un obstacle dans un espacement de sauvegarde (E) situé entre l'entrée de quai de transbordement (3) et la butée mobile (6).

## Description

La présente invention concerne un dispositif de sécurité pour quai de transbordement améliorant la sécurité du personnel de quai lors des phases d'accostage, de chargement et de déchargement de marchandises à l'arrière des véhicules.

La manutention de marchandises entre les véhicules et les bâtiments est effectuée à partir de quais de transbordement. Chaque entrée de quai comporte généralement un niveleur permettant de rattraper le dénivellement entre le quai et les différentes hauteurs de véhicules. Les niveleurs de quai présentent une rampe de mise à niveau déplaçable vers le plateau du véhicule pour permettre la manutention de marchandises entre l'arrière du véhicule et le quai de transbordement.

Le transbordement des marchandises peut présenter certains dangers pour les utilisateurs. A cette intention, l'institut national de recherche et de sécurité (INRS) met en garde les professionnels sur les choix inopportuns de conception qui peuvent exposer le personnel de quai à des risques graves, voire mortels, existants à chacune des phases de mise à quai et de transbordement. En effet, les circonstances dans lesquelles se produisent les accidents les plus graves sont la plupart du temps consécutives à l'écrasement du réceptionnaire entre le niveleur de quai et l'arrière du véhicule lors du recul de celui-ci.

Pour réduire les risques d'accident, l'INRS recommande notamment l'utilisation de butoirs de quai ménageant un espacement de sauvegarde entre le mur et le véhicule d'au moins 0,5 m pour protéger les piétons du risque d'écrasement (norme NF EN 349 - Ecartements minimaux pour prévenir les risques d'écrasement de parties du corps humain). Cela implique cependant l'emploi de niveleurs de quai spécifiques, suffisamment longs pour que leur déploiement par-dessus l'espacement de sauvegarde parvienne jusqu'au plateau du véhicule. Cette contrainte implique donc la plupart du temps le remplacement du niveleur de quai existant ou l'installation d'un matériel spécifique de jonction, ce qui augmente les coûts de rénovation pour la sécurisation de bâtiments anciens.

L'invention vise notamment à résoudre ces problèmes en proposant un dispositif de sécurité pour quai de transbordement ménageant un espacement de sauvegarde pour le personnel qui ne nécessite ni le remplacement des niveleurs de quai existant, ni un matériel spécifique de jonction.

A cet effet, l'invention a pour objet un dispositif de sécurité pour quai de transbordement **caractérisé en ce qu'il** comporte au moins un butoir de quai présentant :
- un socle de maintien destiné à être fixé à une entrée de quai de transbordement,
- une butée mobile contre laquelle l'arrière d'un véhicule est destiné à venir en appui pour rétracter ladite butée mobile vers ledit socle de maintien par poussée dans une position rétractable,
- une liaison extensible/rétractable reliant ladite butée mobile audit socle de maintien,
- un moyen d'actionnement de ladite liaison extensible/rétractable pour déployer ladite butée mobile à l'écart dudit socle de maintien dans une position de déploiement, et
- un moyen de blocage
et **caractérisé en ce que** le dispositif de sécurité comporte en outre un détecteur de présence apte à commander ledit moyen de blocage pour bloquer la rétractation de la butée mobile par poussée du véhicule en cas de détection d'un obstacle dans un espacement de sauvegarde situé entre l'entrée de quai de transbordement et la butée mobile.

Selon un premier exemple de réalisation, le moyen d'actionnement constitue le moyen de blocage. Le moyen d'actionnement comporte par exemple un vérin ou une vis sans fin. Ainsi le moyen d'actionnement déploie la liaison extensible/rétractable en position de déploiement et autorise sa rétractation uniquement lorsqu'aucun obstacle n'est détecté dans l'espacement de sauvegarde et qu'un véhicule recule contre la butée mobile.

Selon un deuxième exemple de réalisation, le dispositif de sécurité comporte un moyen d'actionnement de la liaison extensible/rétractable et un moyen de blocage de la butée mobile en position de déploiement, distinct dudit moyen d'actionnement.

En cas de détection d'un obstacle dans l'espacement de sauvegarde, le moyen de blocage coopère avec la liaison extensible/rétractable pour empêcher la rétractation de la butée mobile.

Pour cela, la liaison extensible/rétractable comporte par exemple une crémaillère mobile et le moyen de blocage comporte une butée à bascule apte à coopérer avec la crémaillère mobile en cas de détection d'un obstacle dans l'espacement de sauvegarde. Le moyen d'actionnement de la liaison extensible/rétractable comporte par exemple un vérin.

Selon un troisième exemple de réalisation, la liaison extensible/rétractable constitue le moyen d'actionnement et le moyen de blocage. Un vérin horizontal forme par exemple la liaison extensible/rétractable. Ainsi la liaison extensible/rétractable se déploie en position de déploiement, sans possibilité de rétractation excepté lorsqu'aucun obstacle n'est détecté dans l'espacement de sauvegarde et qu'un véhicule recule contre la butée mobile.

Selon une ou plusieurs autres caractéristiques du dispositif de sécurité prise seule ou en combinaison,
- le butoir de quai présente en position déployée d'attente, une épaisseur en saillie au moins supérieure à 500 millimètres et en position rétractée de transbordement, une épaisseur en saillie au moins inférieure à 500 millimètres et de préférence inférieure à 200 millimètres,
- le butoir de quai comporte un soufflet de protection fixé d'une part à la butée mobile et d'autre part au socle de maintien, ledit soufflet de protection enveloppant la liaison extensible/rétractable,
- la liaison extensible/rétractable comporte au moins une paire de jambes articulées,
- le détecteur de présence comporte un capteur à infrarouge ou un détecteur de mouvement radar,
- le dispositif de sécurité comporte une paire de butoirs de quai, chaque socle de maintien étant destiné à être fixé de part et d'autre de l'entrée de quai de transbordement, lesdits butoirs de quai étant décalés en hauteur.

Ainsi, lorsqu'un véhicule recule vers une entrée de quai, un espacement de sauvegarde pour le réceptionnaire est ménagé entre le niveleur de quai et le véhicule venant en appui à l'encontre des butées mobiles.

Si un obstacle est détecté dans cet espacement de sauvegarde par le détecteur de présence, le moyen de blocage bloque la rétractation des butées, bloquant ainsi consécutivement le recul du véhicule et laissant à une personne détectée un refuge lui évitant son écrasement accidentel. En revanche, si aucun obstacle n'est détecté dans l'espacement de sauvegarde, le moyen de blocage autorise la rétractation des butées et le véhicule peut continuer à reculer en direction du quai de transbordement, rétractant ainsi la butée.

A l'arrêt du véhicule, lorsque les butoirs de quai sont en position rétractée de transbordement, le niveleur de quai standard est suffisamment long pour pouvoir être utilisé pour la circulation des engins de manutention.

On dispose ainsi d'un dispositif de sécurité permettant d'interrompre la rétractation de la butée mobile de façon complètement automatique.

D'autres caractéristiques et avantages de l'invention ressortiront de la description suivante, donnée à titre d'exemple, sans caractère limitatif, en regard des dessins annexés sur lesquels:
- la figure 1 est une vue en perspective d'un bâtiment présentant des quais de transbordement,
- la figure 2 est une vue en perspective d'un butoir de quai à l'état rétracté selon un premier exemple de réalisation,
- la figure 3 est une vue du butoir de quai de la figure 2 à l'état déployé,
- la figure 4 est une vue d'une variante de butoir de quai à l'état déployé,
- la figure 5 est une vue schématique d'un dispositif de sécurité pour quai de transbordement,
- la figure 6 est une vue en perspective d'un butoir de quai selon un deuxième exemple de réalisation en cas de détection d'un obstacle dans l'espacement de sauvegarde, le moyen de blocage coopérant avec la liaison extensible/rétractable, et
- la figure 7 est une vue du butoir de quai de la figure 6 en position rétractable, ladite liaison extensible/rétractable étant libérée du moyen de blocage.

Sur ces figures, les éléments identiques portent les mêmes numéros de référence.

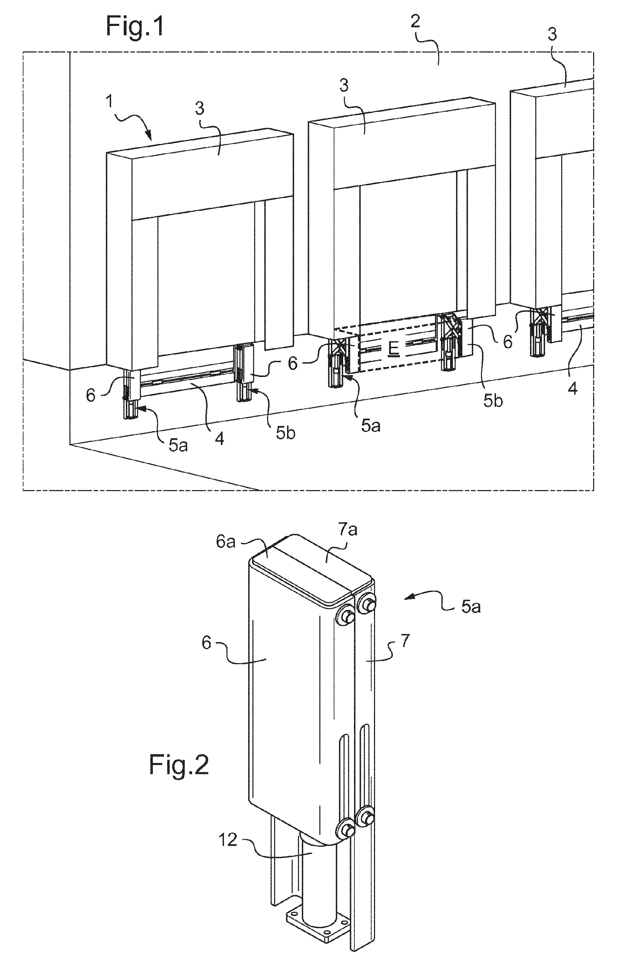

La figure 1 représente trois quais de transbordement 1 pour la manutention de marchandises entre des véhicules tels qu'une fourgonnette, un camion ou une semi-remorque et un bâtiment 2. Chaque quai de transbordement 1 présente une entrée 3 et un niveleur de quai 4. Le niveleur de quai 4 comporte une rampe de mise à niveau, par exemple motorisée pour être déplaçable entre une position de repos dans le quai de transbordement 1 et une position dépliée vers le plateau du véhicule. Dans la position dépliée, le niveleur de quai 4 rattrape le dénivellement entre le quai de transbordement 1 et les différentes hauteurs de véhicules pour la circulation des engins de manutention.

Dans l'exemple représenté sur la figure 1, le dispositif de sécurité comporte une paire de butoirs de quai 5a, 5b contre lesquels l'arrière d'un véhicule est destiné à venir en appui, fixés en saillie sensiblement à la même hauteur du sol et de part et d'autre de l'entrée 3 de quai. On peut également envisager deux butoirs de quai à des hauteurs décalées du sol de manière à adapter le dispositif de sécurité à des remorques de hauteur différentes (non représenté). On peut également envisager de fixer un unique butoir de quai, par exemple agencé en position centrale sous le niveleur de quai 4 (non représenté).

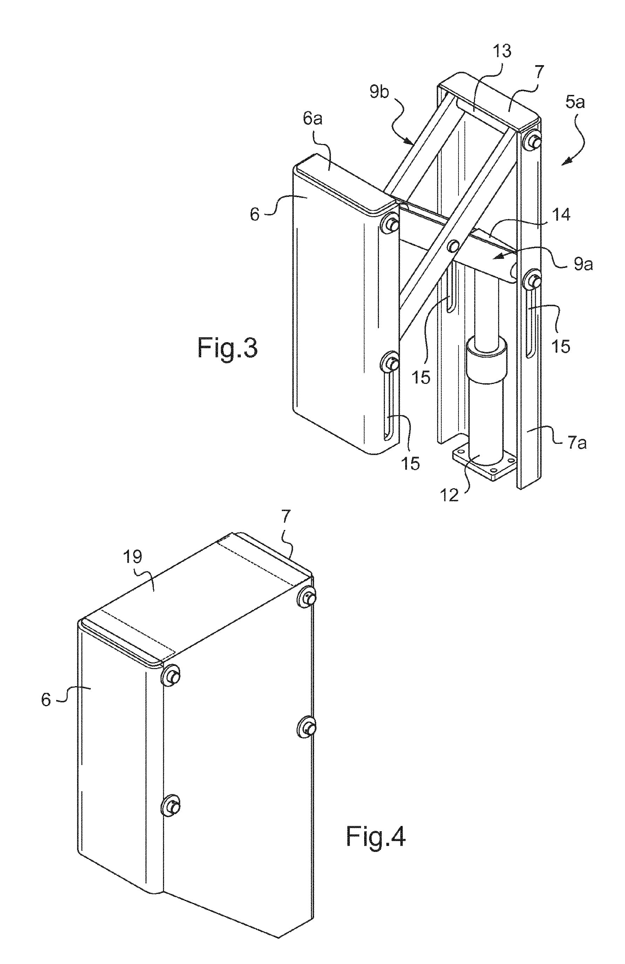

Mieux visible sur les figures 2 et 3, chaque butoir de quai 5a, 5b comporte un socle de maintien 7 fixé contre le mur du quai de transbordement de part et d'autre de l'entrée 3, une butée mobile 6 contre laquelle l'arrière d'un véhicule est destiné à venir en appui pour rétracter ladite butée mobile 6 vers ledit socle de maintien 7 par poussée dans une position rétractable, une liaison extensible/rétractable reliant ladite butée mobile 6 au socle de maintien 7, un moyen d'actionnement 12 de la liaison extensible/rétractable pour déployer ladite butée mobile 6 à l'écart dudit socle de maintien 7 dans une position de déploiement, et un moyen de blocage.

En position rétractée de transbordement, la butée mobile 6 est poussée contre le socle de maintien 7 (premier quai de transbordement à gauche sur la figure 1 et figure 2). En position déployée d'attente, la butée mobile 6 est bloquée à l'écart du socle de maintien 7 (deuxième et troisième quai de transbordement sur la figure 1 et figure 3).

Les butoirs de quai 5a, 5b présentent une épaisseur en saillie en position déployée d'attente au moins supérieure à 500 millimètres et en position rétractée de transbordement, une épaisseur en saillie de préférence inférieure à 200 millimètres. L'espacement de sauvegarde E entre le niveleur de quai 4 en position déployée d'attente et les deux butées 6 est alors d'au moins 0, 5 mètres de large comme préconisé par la norme NF EN 349 pour prévenir les risques d'écrasement du corps humain. Et, dans la position rétractée de transbordement, l'épaisseur en saillie du quai de transbordement 1 est suffisamment étroite pour permettre l'utilisation d'un niveleur de quai standard.

La butée mobile 6 et le socle de maintien 7 peuvent présenter des bordures latérales complémentaires 6a, 7a coopérant en position rétractée de transbordement pour abriter la liaison extensible/rétractable (figure 2).

Selon un autre exemple représenté en figure 4, le butoir de quai comporte un soufflet de protection 19 fixé d'une part à la butée mobile 6 et d'autre part au socle de maintien 7. Le soufflet de protection 19 enveloppe la liaison extensible/rétractable, par exemple par une toile accordéon, permettant de protéger les personnes, en évitant par exemple de coincer une main ou un pied au cours de la rétractation de la butée mobile 6.

Selon un exemple de réalisation représenté sur les figures 2 et 3, la liaison extensible/rétractable comporte deux ciseaux 9a, 9b comprenant chacun une paire de jambes articulées en leur point d'intersection. Les ciseaux 9a, 9b sont identiques et parallèles et chaque articulation est située au centre des jambes. Les ciseaux 9a, 9b sont reliés respectivement à la butée mobile 6 et au socle de maintien 7 par des tiges de liaison transversales 13, 14 dont deux sont mobiles (seules les tiges de liaison transversale fixe 13 et mobile 14 du socle de maintien 7 sont visibles sur la figure 3). Les extrémités des tiges de liaison transversales mobiles 14 comportent un rétrécissement pouvant coulisser dans une rainure de guidage 15 par exemple traversante ménagée dans les bordures latérales respectives 7a, 6a du socle de maintien 7 et de la butée mobile 6. La rainure de guidage 15 peut également représenter la forme d'un rail fixé dans les bordures latérales (non représenté).

Le moyen d'actionnement 12 est par exemple logé entre les deux ciseaux 9a, 9b et fixé d'une part, au quai de transbordement 1 et d'autre part, à la tige de liaison transversale mobile 14 pour déplacer la butée mobile 6 à l'écart du socle de maintien 7 fixé au quai de transbordement 1.

Le moyen d'actionnement 12 comporte par exemple un vérin tel qu'un vérin télescopique hydraulique ou pneumatique. L'utilisation d'un vérin permet de réduire considérablement l'encombrement.

La butée 6 est alors mobile entre une position déployée d'attente pour laquelle les ciseaux 9a, 9b sont ouverts (figure 3) et une position rétractée de transbordement pour laquelle les ciseaux 9a, 9b sont fermés (figure 2). La liaison extensible/rétractable ainsi formée présente l'avantage d'être de construction simple et économique.

Le dispositif de sécurité 9 comporte également un détecteur de présence 10 apte à modifier l'état d'un circuit électrique 11 apte à commander simultanément les moyens de blocage des butoirs de quai 5a, 5b pour bloquer la rétractation de la butée mobile 6 par poussée du véhicule en cas de détection d'un obstacle dans un espacement de sauvegarde E situé entre les deux butoirs de quai 5a, 5b (voir figure 1).

On prévoit en outre que le moyen de blocage soit configuré pour bloquer la rétractation de la butée mobile 6 par défaut en l'absence d'alimentation. On s'assure ainsi de la protection des personnes en cas de coupure de courant ou avarie en empêchant de rétracter les butoirs de quai.

Dans ce premier exemple de réalisation, le moyen d'actionnement 12 constitue le moyen de blocage. On peut prévoir en outre qu'en position rétractable, le moyen d'actionnement présente une vitesse de rétractation des butées mobiles 6 réduite, de manière à assurer un accostage en douceur du véhicule au quai.

Le détecteur de présence 10 comporte par exemple des cellules en regard, telles que des photocellules infrarouges ou des cellules de détecteur de mouvement radar. Les cellules sensibles en vis-à-vis peuvent être logées dans les butoirs de quai 5a, 5b respectifs, pour détecter un obstacle dans la longueur de l'espacement de sauvegarde E.

Alternativement ou en complément, le détecteur de présence 10 est logé dans une barre palpeuse (ou tranche de sécurité), telles que celles utilisées pour les portails coulissants. Plus précisément, le détecteur de présence 10 est logé dans un bord sensible de la barre palpeuse, tel qu'un profilé en matière souple élastique, par exemple en caoutchouc.

La barre palpeuse peut être montée sur les butées mobiles 6 du butoir de quai, dans une direction transversale à la direction de recul du véhicule, en s'étendant au moins partiellement sur la largeur de l'espace de sauvegarde E, le bord sensible étant orienté vers l'intérieur de l'espacement de sauvegarde E. La barre palpeuse se déplace alors avec les butées mobiles 6. Ainsi, au moment où le véhicule recule, une personne restée dans l'espacement de sauvegarde E est détectée par le bord sensible de la barre palpeuse.

La barre palpeuse comporte par exemple une rangée de cellules émettrices et/ou réceptrices et une deuxième série de cellules complémentaires est fixées en regard du bord sensible, par exemple sous l'entrée 3 du quai de transbordement.

Selon un autre exemple, le détecteur de présence 10 comporte un câble en acier dont une extrémité est fixe et l'autre est associée à un dispositif mobile (mécanique ou électrique) apte à interrompre un circuit électrique pour l'alimentation électrique ou hydraulique des moyens d'actionnement 12. Lors du recul du véhicule vers le quai de transbordement, un obstacle présent dans la fosse rencontre le bord sensible de la barre palpeuse, tendant le câble d'acier. Le dispositif mobile se déplace alors, commutant le circuit électrique 11, coupant l'alimentation des moyens d'actionnement 12.

En fonctionnement, les butoirs de quai 5a, 5b prêts pour l'accostage d'un véhicule sont positionnés dans la position déployée d'attente par les moyens d'actionnement 12 (deuxième et troisième quai de transbordement sur la figure 1 et figure 3).

Lorsqu'un véhicule recule vers une entrée de quai 3, un espacement de sauvegarde E pour le réceptionnaire est ménagé entre le niveleur de quai 4 et le véhicule venant en appui à l'encontre des butées mobiles 6.

Si un obstacle est détecté dans cet espacement de sauvegarde E par le détecteur de présence 10, les moyens d'actionnement 12 qui constituent les moyens de blocage, bloquent la rétractation des butées 6, bloquant ainsi consécutivement le recul du véhicule et laissant à une personne détectée un refuge lui évitant son écrasement accidentel.

En revanche, si aucun obstacle n'est détecté dans l'espacement de sauvegarde E, les moyens d'actionnement 12 autorisent la rétractation des butées et le véhicule peut continuer à reculer en direction du quai de transbordement 1, rétractant ainsi la butée 6.

A l'arrêt du véhicule, lorsque les butoirs de quai 5a, 5b sont en position rétractée de transbordement, le niveleur de quai standard est suffisamment long pour pouvoir être utilisé pour la circulation des engins de manutention (premier quai de transbordement à gauche sur la figure 1 et figure 2).

On dispose ainsi d'un dispositif de sécurité 9 permettant d'interrompre la rétractation de la butée mobile 6 lorsque le détecteur de présence 10 détecte un obstacle dans l'espacement de sauvegarde E.

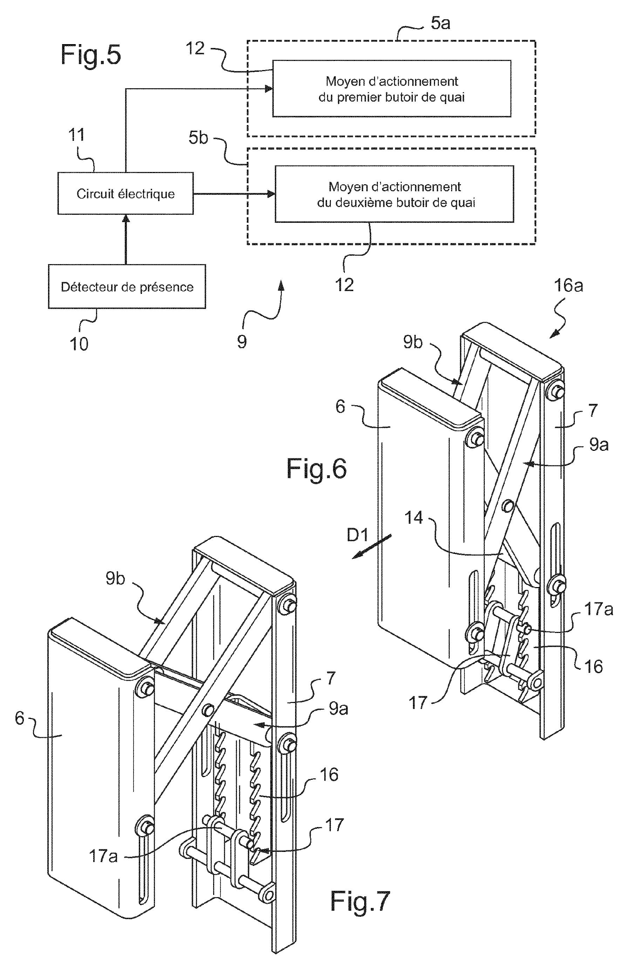

Selon un deuxième exemple de réalisation représenté sur les figures 5 et 6, le dispositif de sécurité comporte un moyen d'actionnement de la liaison extensible/rétractable (non représenté) tel qu'un vérin, et un moyen de blocage de la butée mobile 6 en position de déploiement, distinct du moyen d'actionnement.

Seuls les éléments différents du premier exemple de réalisation sont décrits ci-après.

Comme dans le premier exemple de réalisation, la liaison extensible/rétractable comporte par exemple deux ciseaux 9a, 9b comprenant chacun une paire de jambes articulées.

La liaison extensible/rétractable comporte une crémaillère 16, mobile verticalement. Une extrémité de la crémaillère 16 est fixée à la tige de liaison transversale mobile 14 des ciseaux 9a, 9b. La crémaillère mobile 16 présente en outre des dents orientées sensiblement vers le bas. Ainsi, la crémaillère mobile 16 est entraînée vers le haut lorsque la liaison extensible/rétractable se déploie et est entraînée vers le bas lorsque la liaison extensible/rétractable se rétracte.

En cas de détection d'un obstacle dans l'espacement de sauvegarde E, le moyen de blocage coopère avec la liaison extensible/rétractable pour empêcher la rétractation de la butée mobile 6.

Le moyen de blocage comporte pour cela une butée à bascule 17 présentant une barre transversale 17a montée pivotante par rapport au socle de maintien 7. La butée à bascule 17 est par exemple élastiquement sollicitée à l'encontre de la crémaillère et retenue à l'écart par un dispositif de retenue (non représenté).

En cas de détection d'un obstacle dans l'espacement de sauvegarde, le dispositif de retenue lâche la butée 17 qui bascule à l'encontre de la crémaillère mobile 16 et coopère avec les dents de la crémaillère mobile 16 (figure 6).

L'extension de la butée mobile 6 (selon la direction de la flèche D1) est possible car la barre transversale 17a de la butée à bascule 17 peut, en glissant sur le dos des dents, pivoter de manière à laisser passer dent par dent, la crémaillère mobile 16 vers le haut. En outre, la rétractation de la butée mobile 6 dans la direction opposée à D1 est impossible car la barre transversale 17a est coincée dans le creux des dents de la crémaillère mobile 16 empêchant la crémaillère mobile 16 de descendre.

Lorsqu'il n'y a plus d'obstacle dans l'espacement de sauvegarde et après éloignement du véhicule, la liaison extensible/rétractable peut être libérée du moyen de blocage en faisant rebasculer la butée de bascule 17 à l'écart des dents de la crémaillère (figure 7).

Selon un troisième exemple de réalisation non représenté, la liaison extensible/rétractable constitue le moyen d'actionnement et le moyen de blocage. Un vérin horizontal forme par exemple la liaison extensible/rétractable.

Ainsi, la liaison extensible/rétractable se déploie en position de déploiement, sans possibilité de rétractation excepté lorsqu'aucun obstacle n'est détecté dans l'espacement de sauvegarde et qu'un véhicule recule contre la butée mobile.

## Revendications

1. Dispositif de sécurité pour quai de transbordement **caractérisé en ce qu'il** comporte au moins un butoir de quai (5a, 5b) présentant:
- un socle de maintien (7) destiné à être fixé à une entrée de quai de transbordement (3),
- une butée mobile (6) contre laquelle l'arrière d'un véhicule est destiné à venir en appui pour rétracter ladite butée mobile (6) vers ledit socle de maintien (7) par poussée dans une position rétractable,
- une liaison extensible/rétractable reliant ladite butée mobile (6) audit socle de maintien (7),
- un moyen d'actionnement (12) de ladite liaison extensible/rétractable pour déployer ladite butée mobile (6) à l'écart dudit socle de maintien (7) dans une position de déploiement, et
- un moyen de blocage,
et **caractérisé en ce que** le dispositif de sécurité (9) comporte en outre un détecteur de présence (10) apte à commander ledit moyen de blocage pour bloquer la rétractation de la butée mobile (6) par poussée du véhicule en cas de détection d'un obstacle dans un espacement de sauvegarde (E) situé entre l'entrée de quai de transbordement (3) et la butée mobile (6).

2. Dispositif de sécurité selon la revendication 1, **caractérisé en ce que** le moyen d'actionnement constitue le moyen de blocage.

3. Dispositif de sécurité selon la revendication 2, **caractérisé en ce que** la liaison extensible/rétractable constitue le moyen d'actionnement et le moyen de blocage.

4. Dispositif de sécurité selon la revendication 1, **caractérisé en ce que** le moyen de blocage et le moyen d'actionnement sont distincts.

5. Dispositif de sécurité selon la revendication 4, **caractérisé en ce que** la liaison extensible/rétractable comporte une crémaillère mobile (16) et le moyen de blocage comporte une butée à bascule (17) apte à coopérer avec la crémaillère mobile (16) pour bloquer la rétractation de la butée mobile (16) en cas de détection d'un obstacle dans un espacement de sauvegarde (E).

6. Dispositif de sécurité selon l'une des revendications précédentes, **caractérisé en ce que** le moyen d'actionnement comporte un vérin.

7. Dispositif de sécurité selon l'une des revendications 1 à 6, **caractérisé en ce que** le butoir de quai (5a, 5b) présente en position déployée d'attente, une épaisseur en saillie au moins supérieure à 500 millimètres.

8. Dispositif de sécurité selon l'une des revendications précédentes, **caractérisé en ce que** le butoir de quai comporte un soufflet de protection fixé d'une part à la butée mobile (6) et d'autre part au socle de maintien (7), ledit soufflet de protection enveloppant la liaison extensible/rétractable..

9. Dispositif de sécurité selon l'une des revendications précédentes, **caractérisé en ce que** la liaison extensible/rétractable comporte au moins une paire de jambes articulées.

10. Dispositif de sécurité selon l'une des revendications précédentes, **caractérisé en ce que** le détecteur de présence (10) comporte un capteur à infrarouge ou un détecteur de mouvement radar.

11. Dispositif de sécurité selon l'une des revendications 1 à 10, **caractérisé en ce qu'il** comporte une paire de butoirs de quai (5a, 5b), chaque socle de maintien (7) étant destiné à être fixé de part et d'autre d'une entrée de quai de transbordement (3), lesdits butoirs de quai étant décalés en hauteur.
